# EUROPEAN PATENT APPLICATION

(11) **EP 4 663 670 A1**
(43) Date of publication of application: **17.12.2025**
(21) Application number: 25181539.5
(22) Date of filing: 09.06.2025
(51) Int. Cl.: C08F 291/10, C08F 212/08, C08F 279/02, C08F 290/12, C09D 151/04, H01M 4/139, H01M 4/62, H01M 10/052, C08F 8/08, C08F 8/14, C08C 19/28, C08C 19/06

(54) **BINDER INCLUDING COPOLYMER, NEGATIVE ELECTRODE FOR SECONDARY BATTERY INCLUDING SAME BINDER, AND SECONDARY BATTERY INCLUDING SAME NEGATIVE ELECTRODE**

(30) Priority: 11.06.2024 KR 20240075525
(71) Applicant: Hansol Chemical Co., Ltd, Seoul 06169 (KR)
(72) Inventor: GWON, Hyeon-Ji, 54524 Iksan-si, Jeonbuk-do (KR); PARK, Ji-Hye, 54524 Iksan-si, Jeonbuk-do (KR); PARK, Chan-Su, 54524 Iksan-si, Jeonbuk-do (KR); KIM, Gyun-Tae, 54524 Iksan-si, Jeonbuk-do (KR); CHO, Min-Ki, 54524 Iksan-si, Jeonbuk-do (KR); KANG, Ji-Sue, 54524 Iksan-si, Jeonbuk-do (KR); LEE, Eun-Song, 54524 Iksan-si, Jeonbuk-do (KR); CHOI, Ji-Hyun, 54524 Iksan-si, Jeonbuk-do (KR); KIM, Chang-Beom, 54524 Iksan-si, Jeonbuk-do (KR); KWON, Se-Man, 54524 Iksan-si, Jeonbuk-do (KR)
(74) Representative: Ipsilon

(57) **Abstract**

Proposed is a copolymer including a main chain including a first monomer unit based on styrene, a second monomer unit containing a hydroxy group and having 4 or more and 7 or fewer carbon atoms, and a third monomer unit containing a double bond and having 4 or more and 7 or fewer carbon atoms, wherein the second monomer unit of the main chain includes a grafted polymer chain. In addition, proposed are a negative electrode slurry, a negative electrode, and a secondary battery, each including the copolymer.

## Description

### BACKGROUND OF THE INVENTION

### 1. Technical Field

The present disclosure relates to a copolymer usable as a binder, and to a slurry, an electrode, and a secondary battery, each including the copolymer.

### 2. Description of the Related Art

With high energy density, lithium secondary batteries are being used extensively in electrical, electronic, telecommunication, and computer fields. Furthermore, application fields of lithium secondary batteries are being expanded to high-capacity secondary batteries for hybrid vehicles, electric vehicles, and the like, in addition to small lithium secondary batteries for portable electronic devices.

As the application fields of lithium secondary batteries continue to expand, there has been a growing demand for not only higher capacity but also longer life characteristics. One example of a method for achieving a higher capacity of lithium secondary batteries may involve using silicon atom-containing active materials in negative electrodes.

The application of silicon atom-containing active materials, which involves intercalation and deintercalation of a higher amount of lithium than existing carbon-based active materials, may lead to the expectation of improved battery capacity. However, in the case of such silicon-containing active materials, the intercalation and deintercalation of lithium involve considerable volume changes. For this reason, negative electrode active material layers expand and contract significantly during charging and discharging.

As a result, there have been the following problems: deterioration in conductivity between negative electrode active materials, blockage of a conductive path between negative electrode active materials and a current collector, and degradation of secondary battery cycling performance.

However, various existing binders that have been developed (such as polyacrylic acid (PAA), PAA/carboxymethyl cellulose (CMC), Na-PAA, cross-linked PAA, alginate, and polyvinyl alcohol (PVA)) lack adhesive strength or lack durability due to extremely brittle electrodes, meaning that such a problem described above regarding volume expansion is challenging to solve under current circumstances.

Therefore, a binder enabling the capacity retention rate of secondary batteries to be obtained by addressing these problems is required.

In addition, while wet processes are used in the manufacture of secondary battery electrode plates, typical wet processes are conducted as a process in which a material is dispersed in a solution, mixed, and coated with a slurry, followed by drying the solvent.

In this case, significant energy, space, and time are required for drying the solvent, so minimizing the drying process is effective for cost reduction.

In particular, the absence of a recovery system in the solvent drying process affects carbon emissions, and additional costs are required even in the process of recovery and recycling.

In the meantime, during the process of drying the solvent on an electrode, migration causing a binder to move up toward the upper layer of the electrode occurs, which affects the uneven distribution of the binder in the electrode and results in problems with reduced adhesion and reduced electrode uniformity.

Thus, active research on solvent-free dry electrode fabrication to manufacture electrodes is in progress to achieve low costs, environmental friendliness, and uniformity of materials in the electrode.

From the perspective of the cell, dry electrodes are advantageous in improving contact between materials and reducing electrode resistance, as the electrode thickness can be reduced through rolling after slurry application at the cell level.

Although polytetrafluoroethylene (PTFE) is currently used as a dry electrode binder when manufacturing dry electrodes for positive electrodes, there has been little advancement in a dry electrode binder for negative electrodes.

### Document of Related Art

### Patent Document

(Patent Document 1) Korean Patent Application Publication No. 10-2023- 0064383

### SUMMARY

Accordingly, the present disclosure aims to provide a copolymer binder having excellent properties and being usable in dry electrode manufacturing.

In addition, the present disclosure aims to provide a slurry composition having excellent properties using a copolymer.

Furthermore, the present disclosure aims to provide an electrode (especially a negative electrode) having excellent performance, the electrode to which the slurry composition is applied, and a secondary battery having excellent properties, the secondary battery including the electrode.

However, the problems to be solved by the present application are not limited to the aforementioned description, and other problems not mentioned can be clearly understood by those skilled in the art from the following description.

In one aspect of the present application, provided is a copolymer including a main chain including: a first monomer unit based on styrene;
a second monomer unit containing a hydroxy group and having 4 or more and 7 or fewer carbon atoms; and
a third monomer unit containing a double bond and having 4 or more and 7 or fewer carbon atoms,
wherein the second monomer unit of the main chain includes a grafted polymer chain.

In another aspect of the present application, provided is a negative electrode slurry including: the copolymer; and
a negative electrode active material.

In a further aspect of the present application, provided is a negative electrode including: a current collector; and
a negative electrode active material layer including the copolymer, the negative electrode active material layer being formed on the current collector.

In yet another aspect of the present application,
provided is a secondary battery including the negative electrode.

A copolymer of the present disclosure can be used as a binder in dry electrode manufacturing and can improve the performance of an electrode (especially a negative electrode) and a secondary battery.

In particular, the copolymer of the present disclosure can also be used in the manufacture of an all-solid-state electrode or an all-solid-state battery.

### BRIEF DESCRIPTION OF THE DRAWINGS

FIG. 1 is an image showing that an electrode slurry prepared according to Preparation Example 2 using a copolymer binder prepared by Preparation Example 1 of the present disclosure is reground and aggregated; and
FIG. 2 is a graph showing stress-strain measurement results of a copolymer binder prepared by Preparation Example 1 of the present disclosure and a styrenebutadiene rubber (SBR).

### DESCRIPTION OF THE PREFERRED EMBODIMENTS

Hereinafter, the action and effect of the present disclosure will be described in more detail through specific embodiments of the present disclosure. However, these embodiments are provided only for illustrative purposes of the present disclosure, and the scope of the present disclosure is not limited thereby.

Before discussing the details, it should be noted that all terms or words used herein and used in the appended claims are not construed as being limited to general and dictionary meanings but will be interpreted based on the meanings and concepts corresponding to the technical ideas of the present disclosure, following the principle that any inventor is allowed to define the concepts of terms as appropriate to describe the disclosure thereof in the best mode.

Therefore, the embodiments described herein are configured merely as one of the most preferable examples of the present disclosure and do not exhaustively represent the technical idea of the present disclosure. Accordingly, it should be appreciated that there may be various equivalents and modifications that can replace these embodiments as of the filing date of the present application.

As used herein, the singular forms are intended to include the plural forms, unless the context clearly indicates otherwise. It will be further understood that the terms "comprise," "include," "contain," "have," and the like when used herein, are intended to specify the presence of stated features, integers, steps, constituent elements, or combinations thereof but do not preclude the possibility of the presence or addition of one or more other features, integers, steps, constituent elements, or combinations thereof.

As used herein, the expression "a to b" to represent a numerical range is defined as ≥ a and ≤ b.

According to one aspect of the present application, a copolymer includes a main chain including: a first monomer unit based on styrene; a second monomer unit containing a hydroxy group and having 4 or more and 7 or fewer carbon atoms; and a third monomer unit containing a double bond and having 4 or more and 7 or fewer carbon atoms, wherein the second monomer unit of the main chain includes a grafted polymer chain.

The third monomer unit may contain one or more double bonds.

For example, the second monomer unit may be a hydrocarbon containing a hydroxy group and having 4 or more and 7 or fewer carbon atoms, and the third monomer unit may be a hydrocarbon containing a double bond and having 4 or more and 7 or fewer carbon atoms.

By including the grafted polymer chain, the copolymer may have excellent elongation properties and be evenly mixed with active materials even when manufacturing dry electrodes.

The copolymer is used as a binder even when manufacturing dry electrodes and may exhibit sufficient binding effects through fiberization when kneaded with active materials and conductive additives.

In other words, even when manufacturing dry electrodes without using solvents, the copolymer may exhibit binding effects through fiberization of the copolymer during the kneading process with active materials and conductive additives.

The grafted polymer chain of the copolymer may help form a network between copolymers.

In addition, the copolymer may have excellent strain characteristics because both hard and soft segments are obtained, as the main chain and the grafted polymer chain form a single polymer chain, and may exhibit effective binding properties because chain scission does not occur easily.

In one embodiment, the first monomer unit may be formed by polymerizing a styrene monomer, and each of the second and third monomer units may be formed by polymerizing a monomer having a conjugated double bond.

In one embodiment, the monomer having a conjugated double bond may be butadiene, isoprene, or a combination thereof.

In one embodiment, the copolymer may include a monomer repeating unit represented by Chemical Formula 1 below.

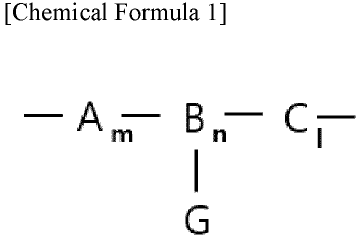

In Chemical Formula 1, A represents the first monomer unit of the main chain, the first monomer unit based on styrene, B represents the second monomer unit of the main chain, the second monomer containing a hydroxy group and having 4 or more and 7 or fewer carbon atoms, C represents the third monomer unit of the main chain, the third monomer unit containing a double bond and having 4 or more and 7 or fewer carbon atoms, G represents the grafted polymer chain, and m, n, and l represent molar ratios of the first monomer unit, the second monomer unit, and the third monomer unit, respectively.

In this case, m + n + l = 1, where m may be 0.6 or greater and 0.95 or less, and n + l may be 0.05 or greater and 0.4 or less.

For example, m may be 0.7 or greater and 0.9 or less, and n + l may be 0.1 or greater and 0.3 or less.

In the meantime, n/(n + l) may be 0.05 or greater and 0.3 or less. For example, n/(n + l) may be 0.1 or greater and 0.25 or less, or may be 0.1 or greater and 0.2 or less.

In one embodiment, A of Chemical Formula 1 may include a first monomer repeating unit represented by Chemical Formula 2 below, B of Chemical Formula 1 may include a second monomer repeating unit represented by Chemical Formula 3-1 below, and C of Chemical Formula 1 may include a third monomer repeating unit represented by Chemical Formula 3-2 below.

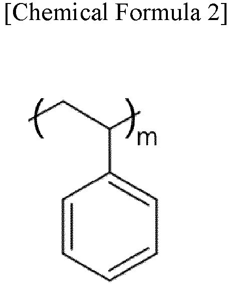

In Chemical Formula 2, m represents a molar ratio of the monomer repeating unit of Chemical Formula 2.

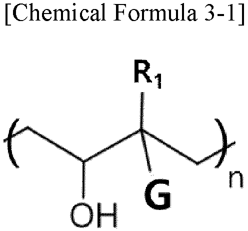

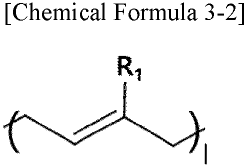

In Chemical Formulas 3-1 and 3-2, R₁ represents hydrogen or a straight-chain or branched-chain hydrocarbon having 1 to 4 carbon atoms, n and l represent molar ratios of the monomer repeating units of Chemical Formulas 3-1 and 3-2, respectively, and G represents the grafted polymer chain of Chemical Formula 1.

In this case, m + n + l = 1, where m may be 0.6 or greater and 0.95 or less, and n + l may be 0.05 or greater and 0.4 or less.

For example, m may be 0.7 or greater and 0.9 or less, and n + l may be 0.1 or greater and 0.3 or less.

In the meantime, n/(n + l) may be 0.05 or greater and 0.3 or less. For example, n/(n + l) may be 0.1 or greater and 0.25 or less, or may be 0.1 or greater and 0.2 or less.

In one embodiment, the grafted polymer chain may be represented by Chemical Formula 4 below.

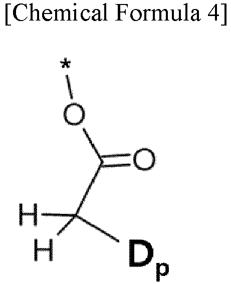

In Chemical Formula 4, * represents a connection site with the main chain, H represents a hydrogen atom, D represents a monomer unit based on acrylate, and p represents the number of monomer units based on acrylate.

In this case, p may be 1 or greater and 1,000 or less. For example, p may be 1 or greater and 100 or less.

In one embodiment, the monomer unit based on acrylate may be formed by polymerizing methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, ethyl hexyl acrylate, ethyl hexyl methacrylate, lauryl acrylate, lauryl methacrylate, stearyl acrylate, stearyl methacrylate, or a combination thereof.

In one embodiment, D of Chemical Formula 4 may include a monomer repeating unit represented by Chemical Formula 5 below.

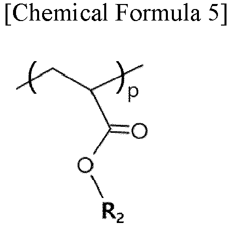

In Chemical Formula 5, p represents the number of monomer repeating units of Chemical Formula 5, and R₂ represents a straight-chain or branched-chain hydrocarbon having 1 to 20 carbon atoms.

In Chemical Formula 5, p may be 1 or greater and 1,000 or less. For example, p may be 1 or greater and 100 or less.

In one embodiment, the weight ratio of the first monomer unit to the second and third monomer units of the main chain (weight of the first monomer unit: weight of the second and third monomer units) may be in the range of 6 to 9.5:0.5 to 4.

When the weight ratio of the first monomer unit to the second monomer unit of the main chain exceeds or falls below the range of the present application, it may be challenging to powderize the copolymer for application to dry electrodes.

In one embodiment, the main chain of the copolymer may be a random or block copolymer.

In one embodiment, the weight average molecular weight of the copolymer measured by gel permeation chromatography (GPC) may be 10,000 g/mol or greater and 1,000,000 g/mol or smaller.

When the weight average molecular weight of the copolymer exceeds or falls below the range of the present application, it may be challenging to powderize the copolymer for application to dry electrodes.

According to another aspect of the present application, a method of preparing a copolymer may include: a first step of polymerizing a monomer based on styrene and a monomer having a conjugated double bond to form a main chain of a copolymer; a second step of introducing a carboxylic acid for introducing a grafted polymer chain to epoxidize the double bond of the main chain of the copolymer; a third step of introducing a functional group by introducing a monomer based on acrylic acid to react with the main chain of the epoxidized copolymer and introduce the grafted polymer chain; and a fourth step of introducing a monomer based on acrylate to additionally polymerize the grafted polymer chain.

To introduce the grafted polymer chain, the functional group may be a vinyl-containing acryl group.

According to a further aspect of the present application, a negative electrode slurry may include: the copolymer; and a negative electrode active material.

In other words, the copolymer may be used as a binder for a negative electrode, the binder being prepared by a dry process.

The negative electrode active material may be one selected from the group consisting of carbon-based materials, silicon, alkali metals, alkaline earth metals, elements of group 13, elements of group 14, transition metals, and rare-earth elements, or may be a compound including one or more of the foregoing. Preferably, the negative electrode active material is silicon or a silicon-containing compound.

Examples of the carbon-based materials may include synthetic graphite, natural graphite, hard carbon, soft carbon, and the like, but are not limited thereto. The silicon-containing negative electrode active material is not particularly limited in type as long as it is silicon or a silicon-containing compound. However, the silicon-containing negative electrode active material is preferably one or more selected from the group consisting of Si, SiOₓ (where 0 < x < 2), Si-Y alloys (where Y is an alkali metal, an alkaline earth metal, an element of group 13, an element of group 14, a transition metal, a rare-earth element, or a combination thereof, but not Si), and Si-C composites.

In addition, when mixed with other negative electrode active materials, which differ from the silicon-containing negative electrode active material, for use as the negative electrode active material, the silicon-containing negative electrode active material may be included in an amount of 8 wt% or more of the total weight of the negative electrode active material.

A negative electrode active material layer, with respect to the total weight thereof, may include 50 to 98 wt% of the negative electrode active material.

When the amount of the negative electrode active material included is less than 50 wt%, the energy density may decrease, making it impossible to manufacture a battery with high energy density. When the amount of the negative electrode active material included exceeds 98 wt%, the contents of a conductive additive and the binder may decrease, resulting in reduced electrical conductivity, and adhesive strength between an electrode active material layer and a current collector may decrease.

In the meantime, the negative electrode slurry, with respect to the total weight thereof, may include 1 to 35 wt% of the copolymer binder of the present application. When the amount of the copolymer is less than 1 wt%, the physical properties of a negative electrode may deteriorate, making the negative electrode active material and a conductive additive fall off. When the amount of the copolymer exceeds 35 wt%, the proportions of the negative electrode active material and a conductive additive may relatively decrease, resulting in reduced battery capacity, and the electrical conductivity of a negative electrode may be deteriorated.

In addition, the negative electrode slurry may further include a polymer in addition to the copolymer of the present application. Specific examples of the polymer may include polyvinylidenefluoride (PVDF), PVA, PAA, PAA metal salts (Metal-PAA), polymethacrylic acid (PMA), polymethylmethacrylate (PMMA), polyacrylamide (PAM), polymethacrylamide, polyacrylonitrile (PAN), polymethacrylonitrile, polyimide (PI), chitosan, starch, polyvinylpyrrolidone, tetrafluoroethylene, polyethylene, polypropylene, ethylene-propylene-diene polymers (EPDMs), sulfonated-EPDMs, SBR, fluoroelastomers, hydroxypropylcellulose, regenerated cellulose, various copolymers thereof, and the like, but are not limited thereto.

According to yet another aspect of the present application, a negative electrode may include: a current collector; and a negative electrode active material layer including the copolymer of the present application, the negative electrode active material layer being formed on the current collector.

The negative electrode active material layer may further include a conductive additive. The conductive additive is used to further improve the conductivity of the negative electrode active material. Such a conductive additive is not particularly limited as long as it is conductive and does not cause chemical changes in batteries in the art to which the present disclosure pertains. Examples of the conductive additive used may include: graphite, such as natural graphite and synthetic graphite; carbon black, such as acetylene black, Ketjen black, channel black, furnace black, lamp black, and thermal black; conductive fibers, such as carbon fibers and metal fibers; metal powders, such as carbon fluoride, aluminum, and nickel powder; conductive whiskers, such as zinc oxide and potassium titanate; conductive metal oxides, such as titanium oxide; polyphenylene derivatives; and the like.

The negative electrode active material layer, with respect to the total weight thereof, may include 0.05 wt% to 30 wt%, preferably 15 wt% to 25 wt%, of the conductive additive. When the amount of the conductive additive included is less than 0.05 wt%, the electrical conductivity of the negative electrode is reduced. When the amount of the conductive additive included exceeds 30 wt%, the proportions of the silicon-based negative electrode active material and the binder may relatively decrease, resulting in reduced battery capacity. In addition, the content of the negative electrode active material decreases as the content of the binder needs to increase to maintain the negative electrode active material layer, making it impossible to manufacture a battery with high energy density.

Because the negative electrode active material layer includes the copolymer of the present application, the negative electrode of the present application may suppress possible volume expansion of the negative electrode active material from occurring when a secondary battery is charged and discharged, and improve the capacity retention rate per cycle.

The negative electrode may be manufactured by the following steps: (a) preparing a composition for forming the negative electrode active material layer, the composition including the negative electrode active material and the copolymer of the present application; and (b) compressing the composition for forming the negative electrode active material layer on a negative electrode current collector.

In the meantime, the composition for forming the negative electrode active material layer may be prepared in a dry negative electrode slurry form without using a solvent.

The composition for forming the negative electrode active material layer may be mixed by common stirring methods using typical mixers, such as a latex mixer, a high-speed shear mixer, a homomixer, and the like.

Step (b) is to manufacture the negative electrode for a lithium secondary battery by compressing the composition for forming the negative electrode active material layer, prepared in Step (a), on the negative electrode current collector.

Specifically, the negative electrode current collector may be selected from the group consisting of copper, stainless steel, titanium, silver, palladium, nickel, alloys thereof, and combinations thereof. The surface of the aforementioned stainless steel may be treated with carbon, nickel, titanium, or silver, and an aluminum-cadmium alloy may be used as the aforementioned alloy. In addition, calcined carbon, a non-conductive polymer the surface of which is treated with a conductive additive, a conductive polymer, or the like may also be used.

The composition for forming the negative electrode active material layer, prepared in Step (a), is applied onto the negative electrode current collector. In this case, the current collector may be coated to have a suitable thickness depending on the desired thickness to be formed, and the thickness is preferably selected appropriately within the range of 10 to 300 µm.

In this case, for the coating of the slurry-form composition for forming the negative electrode active material layer, the composition for forming the negative electrode active material layer may, for example, be fabricated as a free-standing composite film, followed by lamination on an electrode onto an electrode plate or continuous dry powder coating.

Ultimately, the negative electrode for the secondary battery, in which the negative electrode active material layer is formed, may be manufactured.

According to yet another aspect of the present application, a battery may include a negative electrode in which the current collector and the negative electrode active material layer on the current collector are formed.

The battery may be a secondary battery (especially a lithium secondary battery) including a positive electrode, the negative electrode, a separator to be interposed between the positive and negative electrodes, and an electrolyte solution.

The configurations of the positive electrode, the separator, and the electrolyte solution of the lithium secondary battery are not particularly limited in the present disclosure and follow what is known in the related art.

The positive electrode includes a positive electrode active material formed on a positive electrode current collector.

The positive electrode current collector is not particularly limited as long as it is highly conductive and does not cause chemical changes in batteries in the art to which the present disclosure pertains. For example, stainless steel, aluminum, nickel, titanium, calcined carbon, or aluminum or stainless steel, the surface of which is treated with carbon, nickel, titanium, silver, and the like may be used as the positive electrode current collector. In this case, the positive electrode current collector used may have various forms, such as a sheet, a foil, a net, a porous body, a foam, a non-woven body, or a film having fine protrusions and depressions formed on the surface thereof so that the adhesive strength to the positive electrode active material is increased.

Any positive electrode active material available in the art to which the present disclosure pertains is usable as the positive electrode active material constituting a positive electrode active material layer. Specific examples of such a positive electrode active material may include lithium metal; a lithium cobalt-based oxide, such as LiCoO₂; a lithium manganese-based oxide, such as Li₁₊ₓMn₂₋ₓO₄ (where x is in the range of 0 to 0.33), LiMnO₃, LiMn₂O₃, and LiMnO₂; a lithium copper oxide, such as Li₂CuO₂; a vanadium oxide, such as LiV₃O₈, LiFe₃O₄, V₂O₅, and Cu₂V₂O₇; a lithium nickel-based oxide represented by LiN₁₋ₓMₓO₂ (where M is Co, Mn, Al, Cu, Fe, Mg, B, or Ga, and x is in the range of 0.01 to 0.3); a lithium manganese composite oxide represented by LiMn₂₋ₓMₓO₂ (where M is Co, Ni, Fe, Cr, Zn, or Ta, and x is in the range of 0.01 to 0.1) or Li₂Mn₃MO₈ (where M is Fe, Co, Ni, Cu, or Zn ); a lithium-nickel-manganese-cobalt-based oxide represented by Li(NiₐCo_{b}Mn_{c})O2 (where 0 < a < 1, 0 < b < 1, 0 < c < 1, and a + b + c = 1); sulfur or a disulfide compound; a phosphate, such as LiFePO₄, LiMnPO₄, LiCoPO₄, and LiNiPO₄; and Fe₂(MoO₄)₃, but are not limited thereto.

In this case, the positive electrode active material layer may further include a binder, a conductive additive, a filler, other additives, and the like, in addition to the positive electrode active material, and the conductive additive is the same as that described above for the negative electrode for the lithium secondary battery.

In addition, examples of the binder may include PVDF, PVA, PAA, PMA, PMMA, PAM, polymethacrylamide, PAN, polymethacrylonitrile, PI, chitosan, starch, hydroxypropylcellulose, regenerated cellulose, polyvinylpyrrolidone, tetrafluoroethylene, polyethylene, polypropylene, EPDMs, sulfonated-EPDMs, SBR, fluoroelastomers, various copolymers thereof, and the like, but are not limited thereto.

While the separator may be made of a porous substrate, any porous substrate commonly used in electrochemical devices is usable as the porous substrate. For example, a polyolefin-based porous membrane or non-woven fabric may be used, but examples of the separator are not particularly limited thereto.

The separator may be a porous substrate made of any one or a mixture of two or more selected from the group consisting of polyethylene, polypropylene, polybutylene, polypentene, polyethylene terephthalate, polybutylene terephthalate, polyester, polyacetal, polyamide, polycarbonate, PI, polyetheretherketone, polyethersulfone, polyphenylene oxide, polyphenylene sulfide, and polyethylene naphthalate.

The electrolyte solution of the lithium secondary battery, which is a lithium salt-containing non-aqueous electrolyte solution, is composed of a solvent and a lithium salt. As the solvent, a non-aqueous organic solvent, an organic solid electrolyte, an inorganic solid electrolyte, and the like are used.

The lithium salt is a material that is easily dissolved in the non-aqueous electrolyte solution, and examples thereof used may include LiCl, LiBr, LiI, LiClO₄, LiBF₄, LiB₁₀Cl₁₀, LiPF₆, LiAsF₆, LiSbF₆, LiAlCl₄, LiSCN, LiC₄BO₈, LiCF₃CO₂, LiCH₃SO₃, LiCF₃SO₃, LiN(SO₂CF₃)₂, LiN(SO₂F)₂, LiN(SO₂C₂F₅)₂, LiC₄F₉SO₃, LiC(CF₃SO₂)₃, (CF₃SO₂)·2NLi, lithium chloroborane, lithium lower aliphatic carboxylate, lithium 4-phenyl borate imide, and the like.

Examples of the non-aqueous organic solvent used may include aprotic organic solvents, such as N-methyl-2-pyrrolidone, propylene carbonate, ethylene carbonate, butylene carbonate, dimethyl carbonate, diethyl carbonate, ethyl methyl carbonate, gamma-butyrolactone, 1,2-dimethoxy ethane, 1,2-diethoxy ethane, tetrahydroxy franc, 2-methyl tetrahydrofuran, dimethyl sulfoxide, 1,3-dioxolane, 4-methyl-1,3-dioxene, diethyl ether, formamide, dimethylformamide, dioxolane, acetonitrile, nitromethane, methyl formate, methyl acetate, phosphoric acid triester, trimethoxy methane, dioxolane derivatives, sulfolane, methylsulfolane, 1,3-dimethyl-2-imidazolidinone, propylene carbonate derivatives, tetrahydrofuran derivatives, ether, methyl propionate, and ethyl propionate.

Examples of the organic solid electrolyte used may include polyethylene derivatives, polyethylene oxide derivatives, polypropylene oxide derivatives, phosphoric acid ester polymers, poly agitation lysine, polyester sulfide, PVA, PVDF, polymers containing secondary dissociation groups, and the like.

Examples of the inorganic solid electrolyte used may include nitrides, halides, sulfates, and the like of Li, such as Li₃N, LiI, Li₅NI₂, Li₃N-LiI-LiOH, LiSiO₄, LiSiO₄-LiI-LiOH, Li₂SiS₃, Li₄SiO₄, Li₄SiO₄-LiI-LiOH, and Li₃PO₄-Li₂S-SiS₂.

In addition, the non-aqueous electrolyte solution may further include other additives for the purposes of improving the charge and discharge characteristics, flame retardancy, and the like. Examples of the additives may include pyridine, triethylphosphite, triethanolamine, cyclic ether, ethylene diamine, n-glyme, hexaphosphoric acid triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, aluminum trichloride, fluoroethylene carbonate (FEC), propene sultone (PRS), vinylene carbonate (VC), and the like.

The lithium secondary battery, according to the present disclosure, may be subjected to folding and lamination stacking processes of the separator and the electrodes, in addition to a typical winding process. Furthermore, a case of the battery may be cylindrical, prismatic, pouch-type, coin-type, or the like.

Hereinafter, the present application will be described in more detail using the following examples. However, the present application is not limited thereto.

### [Preparation Example 1] Preparation of copolymer

A mixed monomer solution of styrene and isoprene monomers was added dropwise to 2.5 L of dioxane so that the total solid content was 15 wt%. In this case, the weight ratio of styrene to isoprene (weight of styrene: weight of isoprene) in the mixed monomer solution was 8:2. At the same time, 0.6 mass% of V-65, an Azo initiator, was dissolved in 0.5 L of toluene and introduced together. Subsequently, the resulting mixture was reacted at a temperature of 60°C for 12 hours and then cooled.

Then, for epoxidation enabling the introduction of an acryl group into the double bond of the isoprene of the prepared main chain, formic acid and H₂O₂ were added dropwise at a temperature of 60°C for 12 hours. In this case, the molar ratios of formic acid and H2O2 with respect to the number of moles of isoprene were 0.25 and 0.5, respectively.

The main chain of the styrene-isoprene copolymer, into which an epoxy group was introduced through the reaction, was precipitated in methanol (MeOH) and purified.

The purified main chain of the styrene-isoprene copolymer, into which the epoxy group was introduced, was dissolved in toluene. Then, acrylic acid was added dropwise at a temperature of 80°C, in which case, the molar ratio of acrylic acid with respect to the number of moles of the main chain of the copolymer was 2. As a result, a vinyl group-containing acryl-structured functional group was introduced to introduce a grafted polymer chain.

Subsequently, butyl acrylate and V-65 were further reacted to complete the formation of the grafted polymer chain.

The prepared copolymer, including the grafted polymer chain, was precipitated in methanol and washed to obtain a powder

One example of the structure of the prepared copolymer, including the grafted polymer chain, is represented by Chemical Formula 6 below.

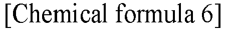

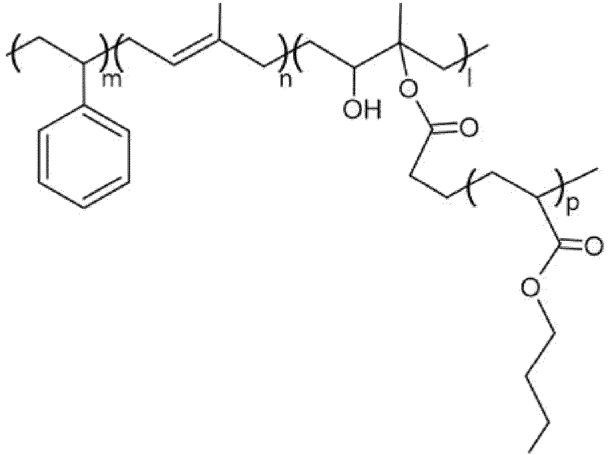

In Chemical Formula 6, m, n, l, and p are the same as those described with reference to Chemical Formulas 1 and 4.

### [Preparation Example 2] Preparation of Electrode Slurry

Based on 100 parts by weight of the total solid content of a slurry, 90 parts by weight of graphite, serving as electrode active materials, and 10 parts by weight of a binder, including the copolymer prepared by Preparation Example 1, were kneaded using a powder kneader.

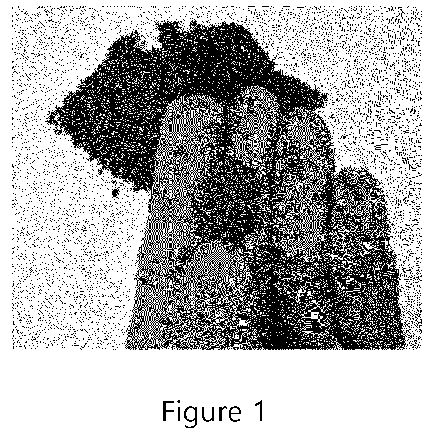

Then, the resulting kneaded mixture was reground and confirmed to be aggregated, as shown in FIG. 1. In other words, it was confirmed that the copolymer binder, prepared by Preparation Example 1, was usable in solvent-free dry electrode manufacturing.

### [Evaluation Example 1]

The stress-strain of the copolymer binder prepared by Preparation Example 1 and an SBR binder (weight ratio of styrene to butadiene (weight of styrene: weight of butadiene) = 8:2) were measured.

The copolymer binder prepared by Preparation Example 1 was dissolved in CHCl₃, serving as a solvent, and poured onto a plate to slowly evaporate the solvent, thereby forming a film.

In the case of the SBR binder, a film was formed by pouring a binder in a dispersed form onto a plate and then evaporating water.

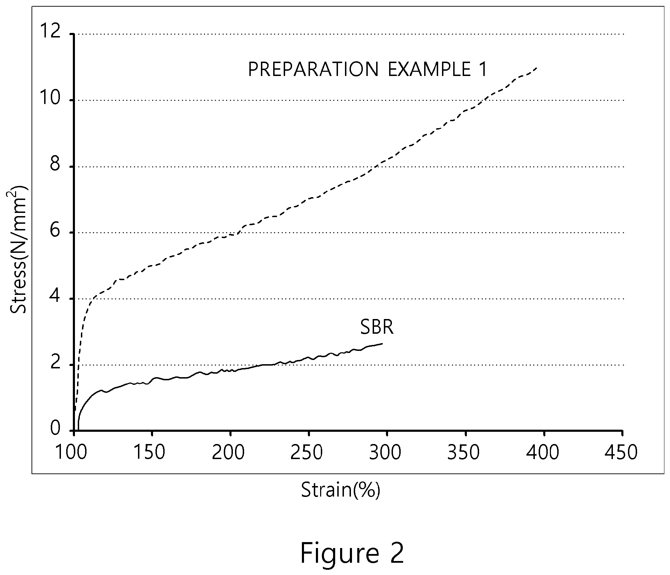

The film formed using the copolymer binder, prepared by Preparation Example 1, and the SBR binder film were cut to the same size, and the stress-strain characteristics were measured using a universal testing machine (UTM). The results thereof are shown in FIG. 2.

The copolymer binder, prepared by Preparation Example 1, exhibited excellent ductility and strength compared to the SBR binder. In addition, during kneading for electrode manufacturing, it was seen that the active materials were able to be surrounded effectively.

This is believed to be effective due to the high-strength main chain and the flexible grafted polymer chain of the copolymer binder prepared by Preparation Example 1.

As a result, it was confirmed that the copolymer, including the grafted polymer chain of the present application, was usable as a binder in solvent-free dry electrode manufacturing (especially for a negative electrode) and had excellent mechanical properties (ductility and rigidity).

In addition, it was seen that the copolymer, including the grafted polymer chain of the present application, had properties suitable for use in future all-solid-state batteries.

The scope of the present disclosure is defined by the appended claims rather than the detailed description presented above. All changes or modifications derived from the meaning and scope of the claims and the concept of equivalents should be construed to fall within the scope of the present disclosure.

## Claims

1. A copolymer comprising a main chain comprising:
a first monomer unit based on styrene;
a second monomer unit comprising a hydroxy group and having 4 or more and 7 or fewer carbon atoms; and
a third monomer unit comprising a double bond and having 4 or more and 7 or fewer carbon atoms,
wherein the second monomer unit of the main chain comprises a grafted polymer chain.

2. The copolymer of claim 1, wherein the first monomer unit is formed by polymerizing a styrene monomer, and
each of the second and third monomer units is formed by polymerizing a monomer having a conjugated double bond.

3. The copolymer of claim 2, the monomer having the conjugated double bond is butadiene, isoprene, or a combination thereof.

4. The copolymer of claim 1, wherein the copolymer comprises a monomer repeating unit represented by Chemical Formula 1 below, 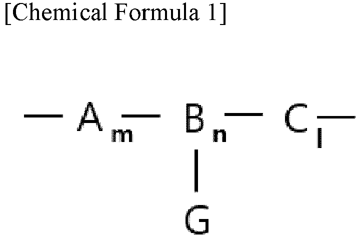
where in Chemical Formula 1, A represents the first monomer unit of the main chain,
B represents the second monomer unit of the main chain, the second monomer containing a hydroxy group and having 4 or more and 7 or fewer carbon atoms,
C represents the third monomer unit of the main chain, the third monomer unit containing a double bond and having 4 or more and 7 or fewer carbon atoms,
G represents the grafted polymer chain, and
m, n, and l represent molar ratios of the first monomer unit, the second monomer unit, and the third monomer unit, respectively.

5. The copolymer of claim 4, wherein A of Chemical Formula 1 comprises a first monomer repeating unit represented by Chemical Formula 2 below,
B of Chemical Formula 1 comprises a second monomer repeating unit represented by Chemical Formula 3-1 below,
and
C of Chemical Formula 1 comprises a third monomer repeating unit represented by Chemical Formula 3-2 below, 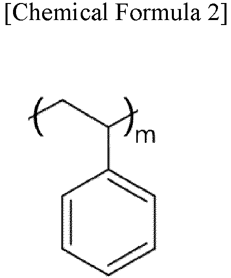
where in Chemical Formula 2, m represents a molar ratio of the monomer repeating unit of Chemical Formula 2, 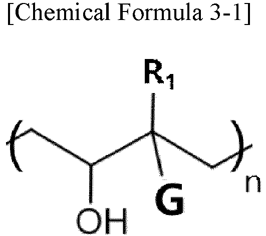 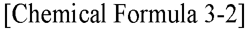 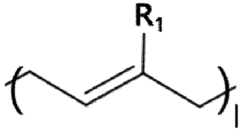
where in Chemical Formulas 3-1 and 3-2, R₁ represents hydrogen or a straight-chain or branched-chain hydrocarbon having 1 to 4 carbon atoms,
n and l represent molar ratios of the monomer repeating units of Chemical Formulas 3-1 and 3-2, respectively, and
G represents the grafted polymer chain of Chemical Formula 1.

6. The copolymer of claim 1, wherein the grafted polymer chain is represented by Chemical Formula 4 below, 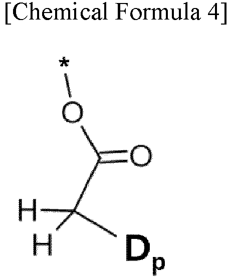
where in Chemical Formula 4, * represents a connection site with the main chain,
H represents a hydrogen atom,
D represents a monomer unit based on acrylate, and
p represents the number of monomer units based on acrylate.

7. The copolymer of claim 6, wherein the monomer unit based on acrylate is formed by polymerizing methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, sec-butyl acrylate, sec-butyl methacrylate, tert-butyl acrylate, tert-butyl methacrylate, ethyl hexyl acrylate, ethyl hexyl methacrylate, lauryl acrylate, lauryl methacrylate, stearyl acrylate, stearyl methacrylate, or a combination thereof.

8. The copolymer of claim 6, wherein D of Chemical Formula 4 comprises a monomer repeating unit represented by Chemical Formula 5 below, 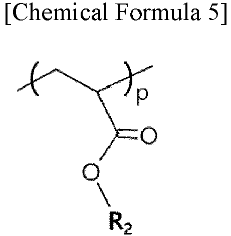
where in Chemical Formula 5, p represents the number of monomer repeating units of Chemical Formula 5, and
R₂ represents a straight-chain or branched-chain hydrocarbon having 1 to 20 carbon atoms.

9. The copolymer of claim 1, wherein a weight ratio of the first monomer unit to the second and third monomer units of the main chain (weight of the first monomer unit: weight of the second and third monomer units) is in a range of 6 to 9.5:0.5 to 4.

10. The copolymer of claim 1, wherein the main chain of the copolymer is a random or block copolymer.

11. The copolymer of claim 1, wherein the copolymer has a weight average molecular weight of 10,000 g/mol or greater and 1,000,000 g/mol or smaller.

12. A negative electrode slurry comprising:
the copolymer of any one of claims 1 to 11; and
a negative electrode active material.

13. A negative electrode comprising:
a current collector; and
a negative electrode active material layer comprising the copolymer of any one of claims 1 to 11, the negative electrode active material layer being formed on the current collector.

14. A secondary battery comprising:
the negative electrode of claim 13.
